Europäisches Patentamt

European Patent Office

Office européen des brevets

(11) Publication number: **0 405 805 A2**

# EUROPEAN PATENT APPLICATION

(21) Application number: **90306557.1**

(22) Date of filing: **15.06.90**

(51) Int. Cl.5: **G06F 15/64**

(30) Priority: **29.06.89 JP 165512/89**

(43) Date of publication of application:
**02.01.91 Bulletin 91/01**

(84) Designated Contracting States:
**DE FR GB**

(71) Applicant: **International Business Machines
Corporation
Old Orchard Road
Armonk, N.Y. 10504(US)**

(72) Inventor: **Kobayashi, Yoshinao
1-10-305 Oimatsu-cho
Hiratsuka-si, Kanagawa-ken(JP)**

(74) Representative: **Burt, Roger James, Dr.
IBM United Kingdom Limited Intellectual
Property Department Hursley Park
Winchester Hampshire SO21 2JN(GB)**

(54) Apparatus for processing image data.

(57) Apparatus for processing image data stored in buffer 1 takes the data from buffer 1 and stores it in line buffer 2 via shift register 4. Line buffer 2 is a RAM, and can be operated in different modes according to how many bits are simultaneously loaded into it from shift register 4. Typically modes that load one, two, four or eight bits are used, and the hardware can be switched between these different operating modes. Loading more than one bit at a time increases the flow speed of data into the RAM, and hence the processing speed of the apparatus. Data are read out from buffer 2 and undergo mask processing (process 2), the results being stored in buffer 3.

FIG. 5

# APPARATUS FOR PROCESSING IMAGE DATA

## Field of the Invention

This invention relates to apparatus for processing image data used for example in character recognition, the inspection processes for printed circuit boards, and image processing of visual robots.

## Background of the Invention

For certain types of pattern recognition, it is necessary to image process the original image information using a 3 x 3 or 4 x 4 mask. Executing this masking process with a microprocessor is very inefficient, and is very time-consuming because of the extremely amount of image information. Many attempts have been made to increase the efficiency of the masking process by adding hardware, but in no case has a sufficient processing speed been achieved by light hardware that can be produced economically . There is a dilemma in that if a faster processing speed is sought, the hardware becomes too large for production, whilst if the hardware is simply arranged, the processing speed is slow.

To mask images that are densely packed in a storage unit, it is necessary to convert each item of image information in the storage unit into an original rectangular image of appropriate length and width. For this, the image needs to be re-packed in a storage unit whose length corresponds to the width of the original image. This unit then acts as a buffer for several lines, and is called a line buffer. The line buffer stores several lines of the image, making it possible to cut the image into rectangles of, for example, 3 x 3 for the masking process. Various hardware configurations for the masking process have been used, the difference between them residing mainly in the method of constructing these line buffers.

## Shift register method:

One conventional hardware configuration for masking images uses a long shift register of 2N + 2 bits as the line buffer for an image of width N bits. The image information read from the image buffer first undergoes a parallel-serial conversion to form a bit stream of 1-bit data, which is then sent to this line buffer. For the parallel-serial conversion of the image data, a 16-bit shift register is used, which can be loaded with 16 bits in parallel. The register performs repeat loadings and shiftings, namely, first performing parallel loading, then 15 bit shiftings, then again parallel loading, then 15 bit shiftings, and so on, thereby producing a bit stream of 1-bit data. The bit stream created in this way is sent to the shift register of 2N + 2 bits. The circuit for converting an image data to a bit stream of 1-bit data is hereinafter referred to as a bit stream generator.

Windows are opened at the N + 1 and the 2N + 2 positions (counted from the beginning of the line buffer), allowing the bits from one line and two lines below the current input line to be fetched. These two bits and the bit that is at the output of the bit stream generator correspond to a group of three bits arranged vertically in the original image. If these three bits are placed in three-bit shift registers, a 3 x 3 matrix can be obtained.

A circuit for fetching and processing a 3 x 3 matrix is hereinafter referred to as a mask processing circuit. A mask processing circuit performs the mask processing of the 3 x 3 bit pattern to output a one-bit result. The bits processed in this way are subjected to a serial-parallel conversion by a 16-bit serial-in parallel-out shift register to be converted to parallel data of 16 bits. Each time 16 bits of data are accumulated in the shift register, they are written into a result buffer, which accumulates the images after mask processing has been performed. The method using a shift register is theoretically straightforward and provides for high-speed processing.

The disadvantages of the shift register method are that the hardware tends to become large because a long shift register is required. Furthermore the length of the shift register must be varied in order to accommodate image information with different widths, but a variable-length shift register is difficult to implement. A circuit that selects the tap position according to the image width can be used, but this further increases the size of hardware used.

## RAM method:

2

In this method, a RAM is used instead of the shift register to perform an equivalent task, avoiding the large hardware size of the shift register. Although inconvenient, the use of a RAM can greatly increase the degree of integration. This makes it possible to obtain a virtual shift register of any length by varying the width of the address range to be scanned, and so an image of any length can be processed, without the circuit that selects the tap position according to the image width in the shift register method, leading to a significant reduction in hardware size. However, because the RAM does not have a function that can freely switch between shift and load, the help of an external circuit is required. This external circuit enables the RAM to perform the equivalent of a parallel load/serial out, and so make it function as a shift register.

In the RAM method, as in the shift register scheme, the image data received in an image buffer are first converted into a bit stream of 1-bit data by a bit stream generator. Then, each bit of this bit stream is written into the RAM. The procedure for writing the bits into a RAM will now be described with reference to the drawings.

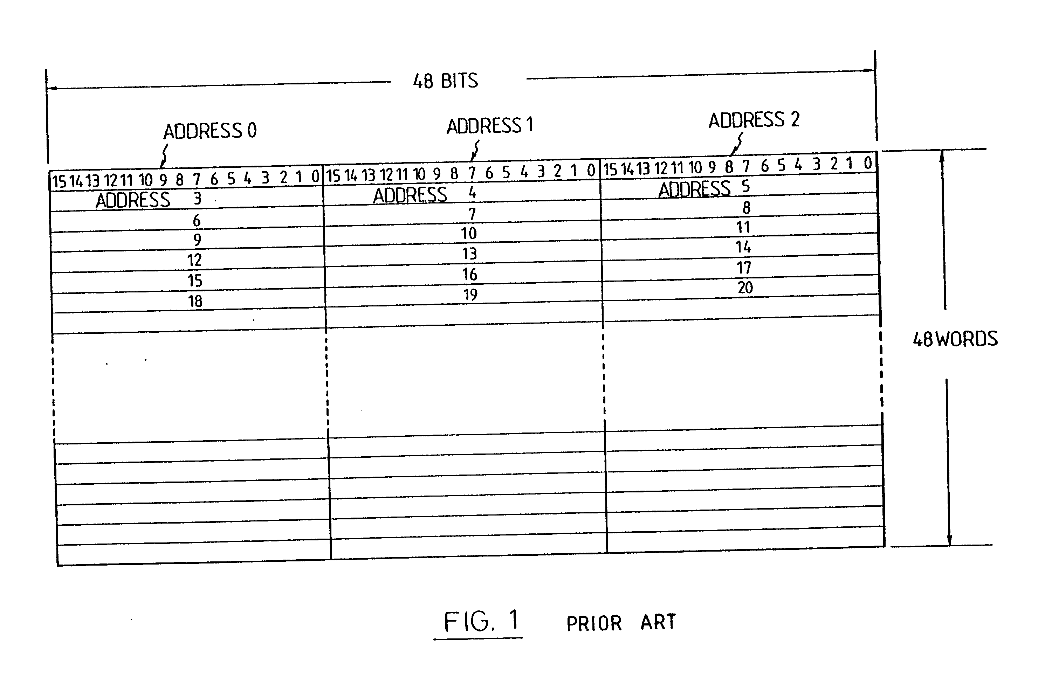

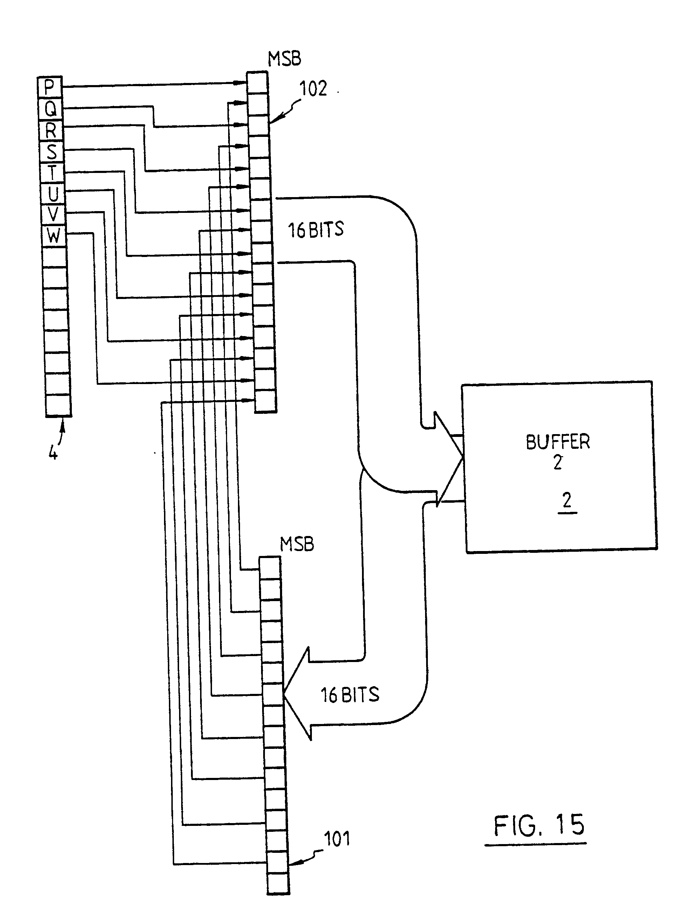

Figure 1 shows an example of part of a raw screen image from a personal computer. Three words are arranged horizontally on the the screen, and 48 words are arranged vertically. Each word is assigned an address, as shown in Figure 15. The left-most bit of each word is the MSB and the right-most bit is the LSB.

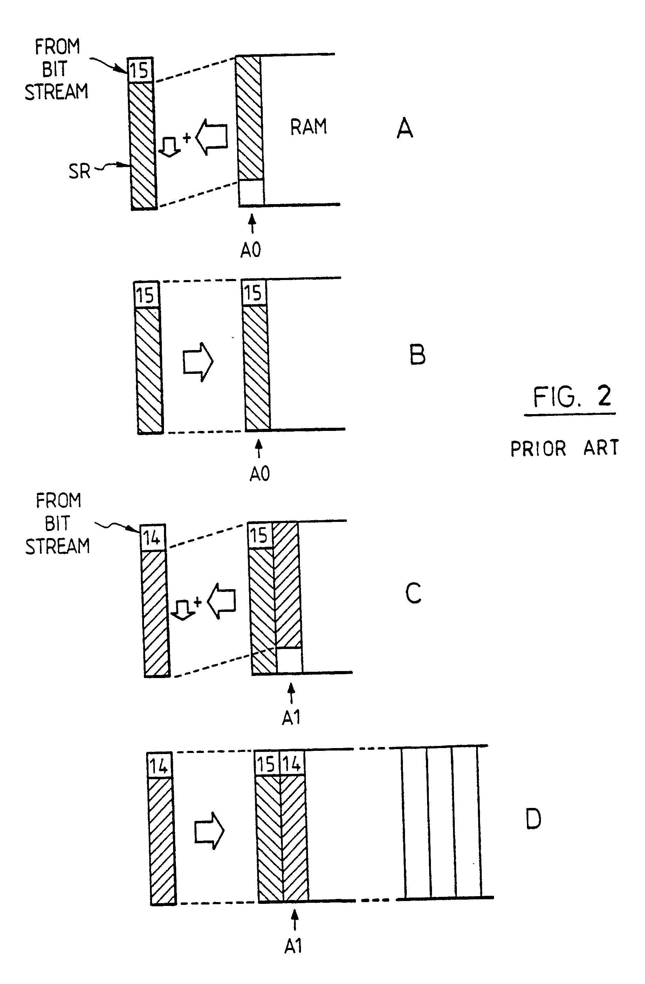

The procedure for writing the word (16 bits) positioned at address 0 into the RAM will be described with reference to Figure 2. The RAM has 16 bits per address, and its addresses are described as A0, A1, .... The term SR in Figure 2 represents a shift register.

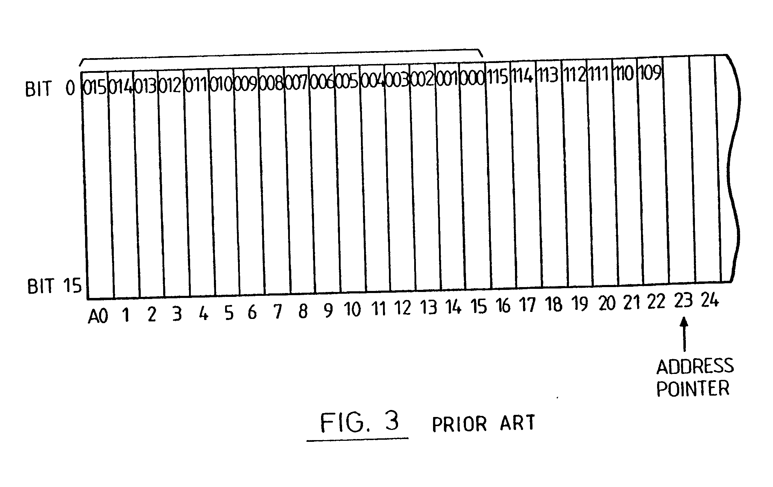

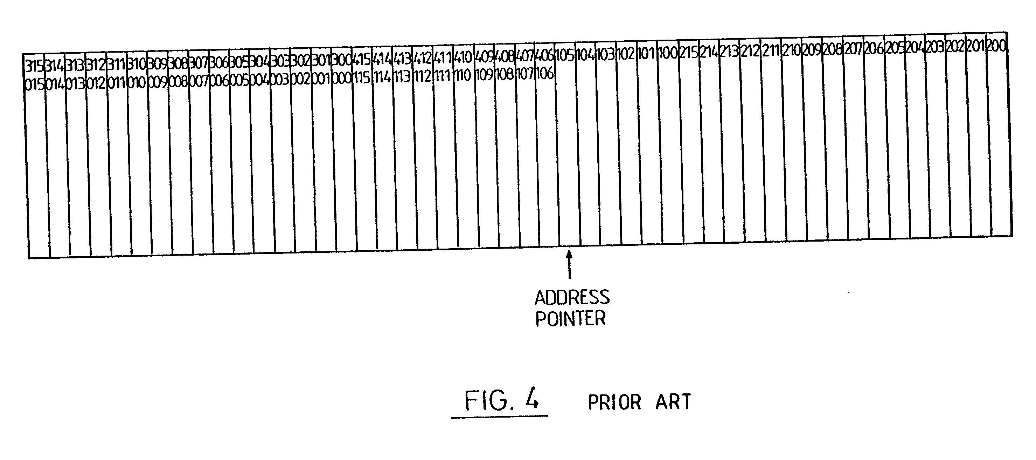

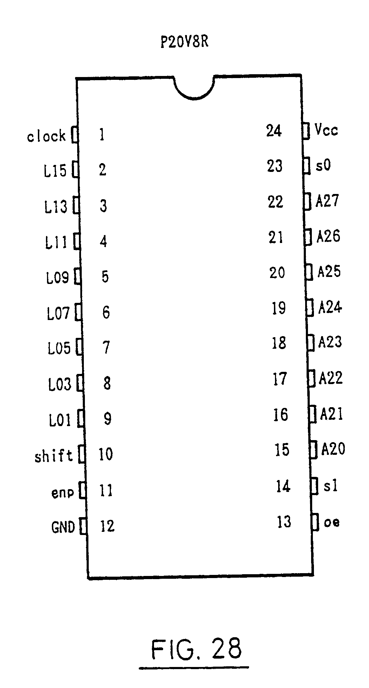

First, the contents of A0 of the RAM are read into the SR, and then the SR is shifted to the right. Bit 015 of the bit stream is inserted into the empty MSB of the SR (Figure 2A). Then, the contents of the SR are written into A0. As a result, bit 015 is written into the RAM (Figure 28). Next, after the address pointer has been shifted to A1, the contents of A1 are read into the SR. The SR is shifted to the right, and bit 014 is inserted into the empty MSB (Figure 2C). Subsequently, the contents of the SR are written into A1. As a result, bit 014 has been written into the RAM (Figure 2D). Figure 3 shows the result after this operation has been repeated until the address points to A23. It will now be understood how one word of image data is stored in the RAM dispersed over 16 addresses. After the address pointer has been incremented to A47, the address pointer again points to A0 and a similar operation is repeated. Figure 4 shows the state of the RAM when the address pointer is pointing to A26 in the second scan. Note that the first three words read in have been shifted down one bit in each RAM address by the transfer into and out of the shift register. This is necessary to avoid overwriting the data just read in. Thus, the 16-bit RAM functions as a 16-line buffer.

In the above example, 48 addresses of the RAM were used, since the image width was 48 bits. If the image width were 96 bits, it would be necessary to use 96 addresses of the RAM. Using the RAM in this manner offers the great advantage that any image width can be accommodated. On the other hand, for processing 1 bit, two accesses are required for the RMW (Read Modify Write) of the RAM. Further, since the access time of the RAM is far slower than the delay time of a logical IC, there will be a drawback that the processing speed may be decreased.

Incidentally, a line buffer utilizing a RAM rotates image information. In the above example, 16 longitudinal bits from line 1 to line 16 of the image are packed in the same bit position across 16 adjacent RAM addresses. This means that the image has been rotated by 90 degrees. Descriptions of methods in which a RAM is used as the line buffer and the image is rotated by 90 degrees can be found in published unexamined applications JA 58-159184 and JA 63-85983. However, both these methods use an 8 x 8 rotator to rotate an 8 x 8 block of the image data by 90 degrees simultaneously. Accordingly, there is a problem of the hardware becoming heavy.

Disclosure of the Invention

The prior art therefore does not disclose an image processing system with a line buffer that can serve any image width and allow high-speed image processing, utilising only light, compact hardware.

Accordingly, the invention provides for apparatus for processing image data, wherein an image comprises lines of X data bits, the apparatus including: (a) a RAM; (b) n buffers formed by logically dividing the bit width of the RAM into n portions (n is an integer not smaller than 2 and is a divisor of X); (c) means for fetching n bits of image data, the n bits being continuous in the line direction of the image; (d) means for sequentially selecting X/n RAM addresses; (e) means for discarding one data bit in each buffer at the selected RAM address and for shifting the remaining data bits therein one bit in the bit width direction of the RAM; and (f) means for placing the n bits obtained by the fetching means (c) into vacant bit positions at the selected RAM address, placing one bit into each of said n buffers.

Typically the data bits are read into and discarded from fixed bit positions in each buffer at the selected address. Discarding a bit creates one vacant position in each of the n buffers. If the new data bits were simply read into these vacant bit positions, without any further action, then the next time that that RAM address was selected, the bits read in most recently would be overwritten, rather than gradually filling up the n buffers. Therefore, accompanying each discard operation is a shift operation that changes the bit positions of the data bits at the selected RAM address, thereby ensuring that the most recently read in bits are not discarded.

An advantage of using a RAM as a line buffer is that any image width can be accommodated. To keep the hardware light, the RAM can be loaded with image data by repeating a simple RMW process. The problem of the relatively slow processing speed can be overcome by loading the RAM according to the invention. Data packing of the line buffer (i.e. the RAM) can be performed on a multiple bit basis, rather than a bit by bit basis, producing an increased processing speed. For example, if the number of bits written into the line buffer by one RMW operation is increased to 2, 4, or 8, the processing speed increases according. In each RMW cycle, n bits are read simultaneously into the RAM, where n is the number of small buffers across the bit width of the RAM. This multiple loading enables the line buffer to operate at the required speed. Operation modes in which 2, 4 or 8 bits are simultaneously loaded into the RAM by one operation will hereinafter be referred to as a double speed mode, a four times speed mode, or an eight times speed mode respectively.

Preferably n, the number of buffers across the bit width of the RAM, is a divisor of the number of bits across the bit width of the RAM, and the n buffers are equal in size. It is also preferred that at least two different values of n can be specified, and that the apparatus for age processing described above can be operated with any of the at least two different values of n. Preferably the apparatus further includes means for switching between said at least two different values of n. It is further preferred that the apparatus further includes means for fetching single bits of image data; means for sequentially selecting X RAM addresses; means for discarding one data bit at the selected RAM address and for shifting the remaining data bits therein one bit in the bit width direction of the RAM; and means for placing a single bit obtained by the fetching means into a vacant bit position at the selected RAM address. Effectively this is equivalent to being able to specify a value of n equal to unity. In this case, with n equal to one, the RAM is operated in a manner analogous to a simple shift register line buffer, except that the image has been rotated by 90 degrees.

The invention is particularly useful in apparatus for processing image data that includes a stage for performing 3x3 or 4x4 masking operations on the image, although it would also be applicable to other image processing techniques that operate on a series of subimages from the original image. Note that the size of mask to be used in the masking operation influences the hardware used and the way in which the RAM will be subdivided - i.e. the possible choices of n.

The invention also provides for a method for processing image data, wherein an image comprises lines of X data bits, in apparatus including a RAM, the method including the following steps: a) logically dividing the the bit width of the RAM into n buffers, where n is an integer not smaller than 2 and is a divisor of X; b) fetching n bits of image data, the n bits being continuous in the line direction of the image; c) sequentially selecting X/n RAM addresses; d) discarding one data bit in each buffer at the selected RAM address, and shifting the positions of the remaining data bits therein by one bit in the bit width direction of the RAM; and e) placing the n bits obtained in step b into vacant bit positions at the selected RAM address, placing one bit in each of said n buffers.

It is preferred that in the above method at least two different values of n, the number of buffers in the RAM, can be specified, and steps b to e are provided for each of the values, and wherein the method further includes the initial step of specifying the value of n.

The invention provides an implementation of a line buffer function that can serve any image width, has light hardware, and provides for high-speed processing.

Brief Description of the Drawings:

Figure 1 illustrates the image data of the whole screen;
Figure 2 illustrates the operation of the normal speed mode;
Figures 3 and 4 illustrate the way in which data are packed into the line buffer in the normal speed mode;
Figure 5 is a block diagram of an image processing system according to the invention;
Figure 6 is a circuit diagram showing one method of implementing the double-speed mode for the system;

Figure 7 illustrates the operation of the double-speed mode;

Figure 8 illustrates the way in which data are packed into the line buffer in the double-speed mode;

Figure 9 is a circuit diagram of one method of implementing the four-times-speed mode;

Figure 10 illustrates the way in which data are packed into the line buffer in the four-times-speed mode;

Figure 11 is a circuit diagram of one method of implementing the eight-times-speed mode;

Figure 12 illustrates the way in which data are packed into the line buffer in the eight-times-speed mode;

Figure 13 is a circuit diagram for switching the four-times-speed mode and the eight-times-speed mode;

Figure 14 is a circuit diagram of one method of implementing the normal speed mode;

Figure 15 is a circuit diagram showing another method of implementing the eight-times-speed mode;

Figure 16 illustrates the positional relationship of image data;

Figure 17 is a circuit diagram of one method of implementing 3 x 3 mask processing for the eight-times-speed mode;

Figure 18 is a circuit diagram of one method of implementing 3 x 3 mask processing for the four-times-speed mode;

Figure 19 illustrates the barrel shifter;

Figures 20 - 22 illustrate the modules constituting the barrel shifter;

Figure 23 illustrates the bit sorter circuit;

Figures 24 and 26 illustrate the modules constituting the bit sorter circuit;

Figure 26 illustrates the bit aligner; and

Figures 27 and 28 illustrate the modules constituting the bit aligner.

## Detailed Description

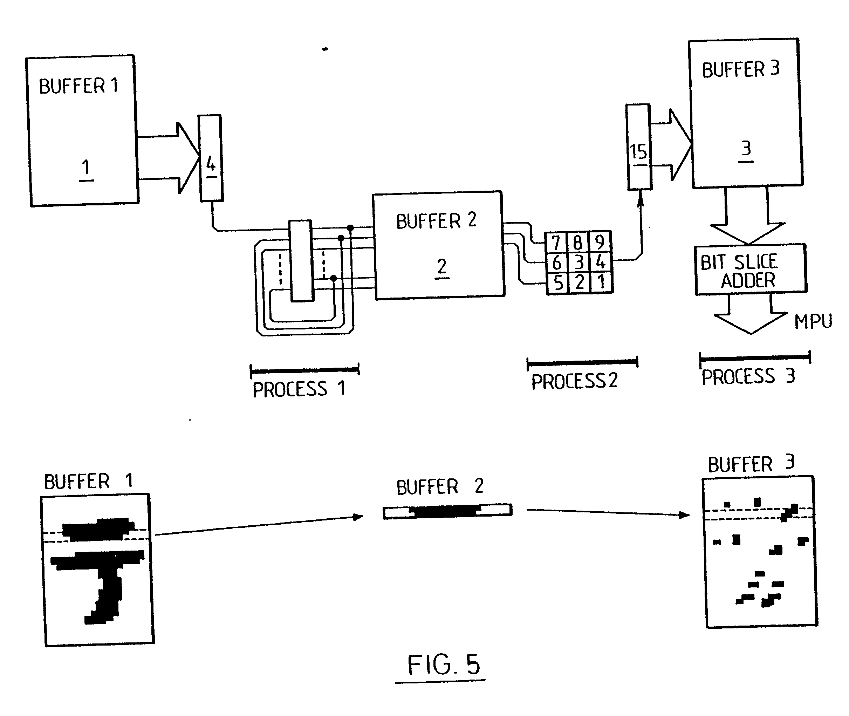

Figure 5 shows an example of an apparatus for processing image data according to the invention, adapted for 3 x 3 mask processing. The cage processing system comprises a total of six units, namely, three data buffers (1, 2, and 3) and three processes. The buffers and processes are alternately arranged in the following sequence:

1. Buffer 1: Raw data
2. Process 1: 90-degree rotation of data
3. Buffer 2: Line buffer
4. Process 2: 3 x 3 Mask processing
5. Buffer 3: Result buffer
6. Process 3: Computation of black bits, etc. Each is described below.

## 1. Buffer 1

This contains unprocessed image data. Since this buffer is dedicated while the image processor is operating, it is preferably an independent memory separated from the system memory of the microprocessor. In terms of circuitry, it is possible to assign buffer 1 within the system memory by means of a DMA, but system performance would be substantially sacrificed. This buffer usually shares the same memory as buffer 3, which will be described later. The size of buffer 1 defines the maximum area that this image processor can handle at one time. To represent a character image by a 64 x 64 dot image, at least 512 bytes are required.

## 2. Process 1

The contents of buffer 1 are read and fed to a line buffer labeled buffer 2 (a 16-bit RAM). Process 1 continuously executes the memory cycle of Read Modify Write (hereinafter referred to as RMW) on each address of buffer 2, thereby achieving the rotation of the data in buffer 1 by 90 degrees into buffer 2. This process will now be described in detail.

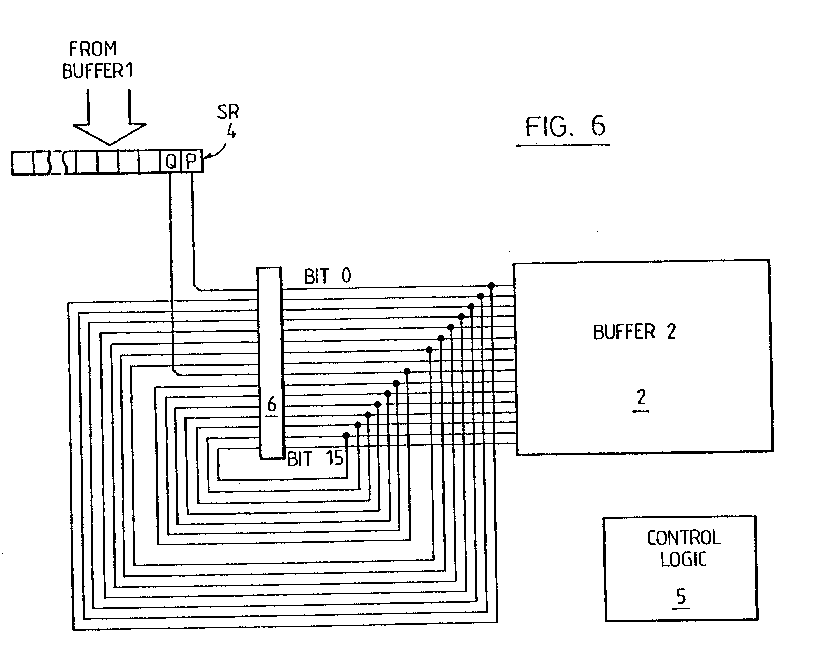

Figure 6 is a hardware configuration for implementing the RMW cycle of buffer 2 in a double-speed mode according to the invention. A shift register 4 (hereafter SR4), which is loaded with 16 bits from buffer 1 in parallel, and thereafter repeats seven times an operation of shifting to the right by two bits at a time.

The MSB enters the right-most position, and the LSB enters the left-most position of SR4. There is a 16-bit latch, latch 6, between SR4 and buffer 2. The output bits 0, 1, ..., 15 of latch 6 are inputted to bits 0, 1, ..., 15 of buffer 2, respectively. The MSB and its adjacent bit (P, Q) of SR4 are inputted to bits 0 and 8 of latch 6, respectively. Bits 0 - 6 of buffer 2 are inputted to bits 1 - 7 of latch 6, and bits 8 - 14 of buffer 2 are inputted to bits 9 - 15 of latch 6, respectively.

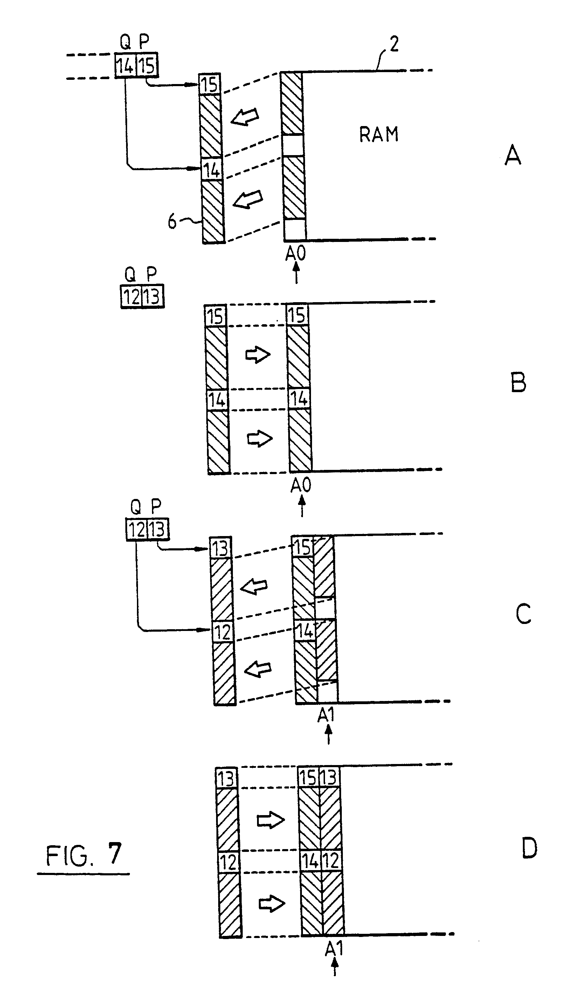

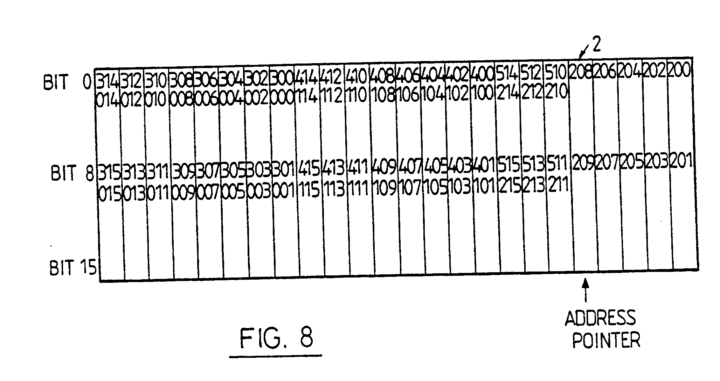

Figure 7 illustrates the way in which one word (bits 0 - 15) of the image of Figure 1 is packed into buffer 2. First, bits 15 and 14 are contained in positions P and Q of SR4. In this state, RMW is executed on address A0. That is, bits 0 - 6 and 8 - 14 of address 0 are inputted to bits 1 - 7 and 9 - 15 of latch 6, respectively. Bits 7 and 15 of address A0 are discarded. Bits P and Q, or bits 15 and 14, are inputted to bits 0 and 8 of latch 6, respectively (Figure 7A). Then, the contents of latch 6 are written into address A0. In parallel with this, the contents of SR4 are shifted to the right by 2 bits. In other words, the contents of bits P and Q become bits 13 and 12 (Figure 7B). In this state, RMW is executed on address A1 (Figures 7C and 7D). By repetition of this operation, the image data shown in Figure 1 are stored as shown in Figure 8. That is, the odd bits are packed into bits 15 - 8 (small buffer 0) of RAM 2, while the even bits are packed into bits 7 - 0 (small buffer 1) of RAM 2. By using 24 addresses of RAM 2, an image width of 48 bits can be served.

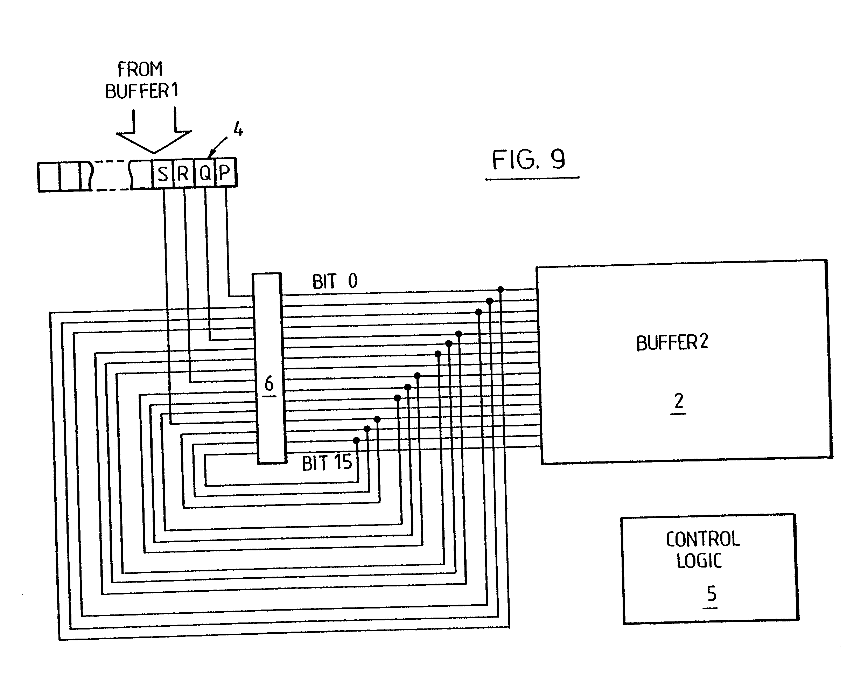

Figure 9 is a hardware configuration implementing a four-times-speed mode according to the invention. It is different from the apparatus of Figure 6 in the following respects:
- The upper four bits of SR4, P, Q, R, and S are inputted to bits 0, 4, 8, and 12 of latch 6, respectively.
- When the contents of buffer 2 are read out into latch 6, bits 3, 7, 11, and 15 are discarded, and bits 0 - 2 of buffer 2 are inputted to bits 1 - 3 of latch 6, bits 4 - 6 of buffer 2 are inputted to bits 5 - 7 of latch 6, bits 8 - 10 of buffer 2 are inputted to bits 9 - 11 of latch 6, and bits 12 - 14 of buffer 2 are inputted to bits 13 - 15 of latch 6, respectively.
- SR4 performs either the operation of shifting to the right by four bits or the operation of loading 16 bits from buffer 1 in parallel each time RMW is executed on buffer 2.

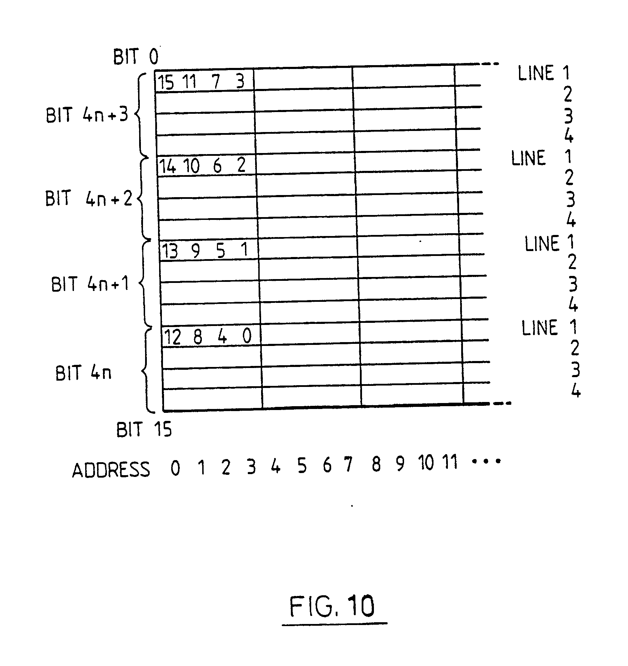

Figure 10 shows the result obtained by repeating an operation similar to Figure 7 on the apparatus of Figure 9 to store 16 bits of image data in buffer 2. If the image width is 48 bits, a line buffer for four lines is formed by using 12 addresses. That is, bits 4n, 4n + 1, 4n + 2 and 4n + 3 are packed into bits 15 - 12 (small buffer 0), 11 - 8 (small buffer 1), 7 - 4 (small buffer 2) and 3 - 0 (small buffer 3) of RAM 2, respectively.

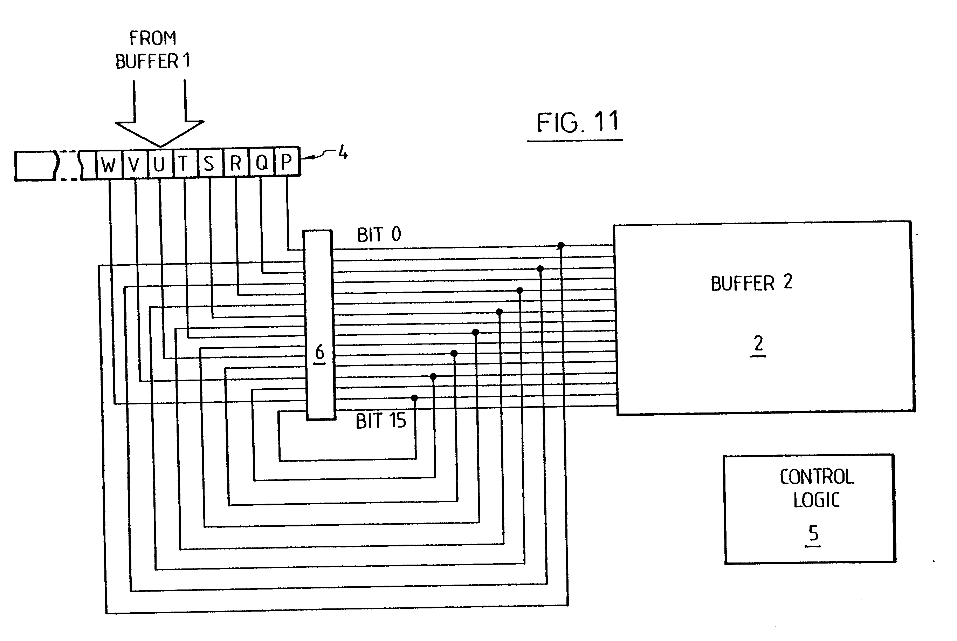

Figure 11 is the hardware configuration for implementing an eight-times-speed mode. It is different from the apparatus of Figures 6 and 9 in the following respects:
- The upper eight bits of SR4, P, Q, R, S, T, U, V, and W are inputted to bits 0, 2, 4, 6, 8, 10, 12, and 14 of latch 6, respectively.
- When the contents of buffer 2 are read out into latch 6, bits 1, 3, 5, 7, 9, 11, 13, and 15 are discarded, and bits 0, 2, 4, 6, 8, 10, 12 and 14 of buffer 2 are inputted to bits 1, 3, 5, 7, 9, 11, 13 and 15 of latch 6, respectively.
- SR4 performs either the operation of shifting to the right by eight bits or the operation of loading 16 bits from buffer 1 in parallel each time RMW is executed on buffer 2.

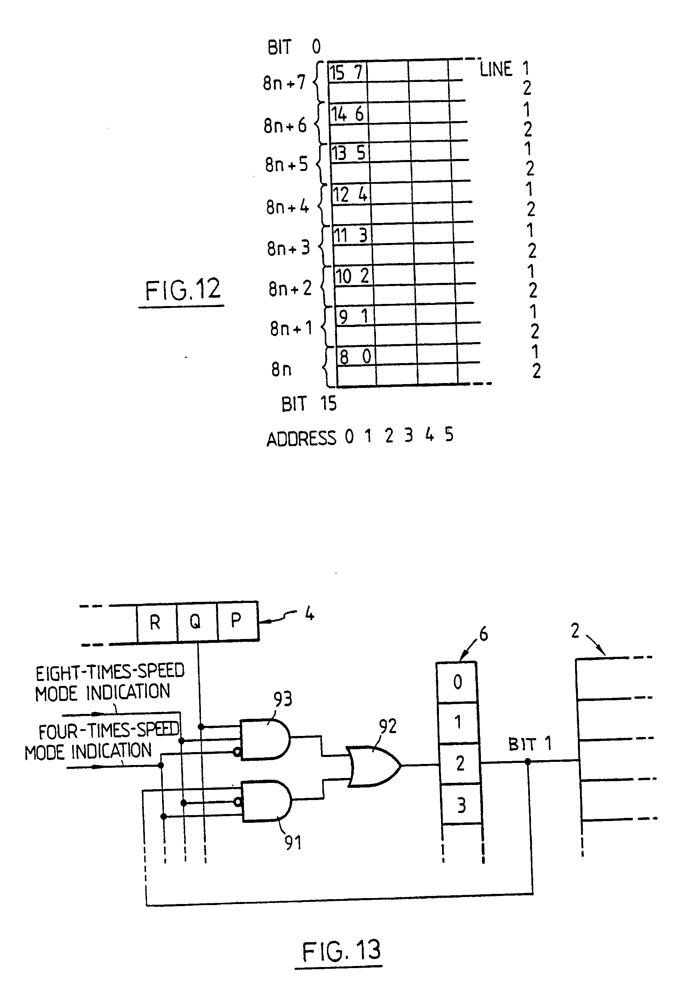

Figure 12 shows the result obtained by repeating an operation similar to that of Figure 7 on the apparatus of Figure 11 to store 16 bits of image data in buffer 2. If the image width is 48 bits, a line buffer for two lines is formed by using six addresses. That is, bits 8n, 8n + 1, 8n + 2, 8n + 3, 8n + 4, 8n + 5, 8n + 6 and 8n + 7 are packed in the bits 15 - 14 (small buffer 0), 13 - 12 (small buffer 1), 11 - 10 (small buffer 2), 9 - 8 (small buffer 3), 7 - 6 (small buffer 4), 5 - 4 (small buffer 5), 3 - 2 (small buffer 6), and 1 - 0 (small buffer 7) of RAM 2, respectively. Of course, if a 32-bit RAM is used as buffer 2, a line buffer for four lines is formed in the eight-times-speed mode.

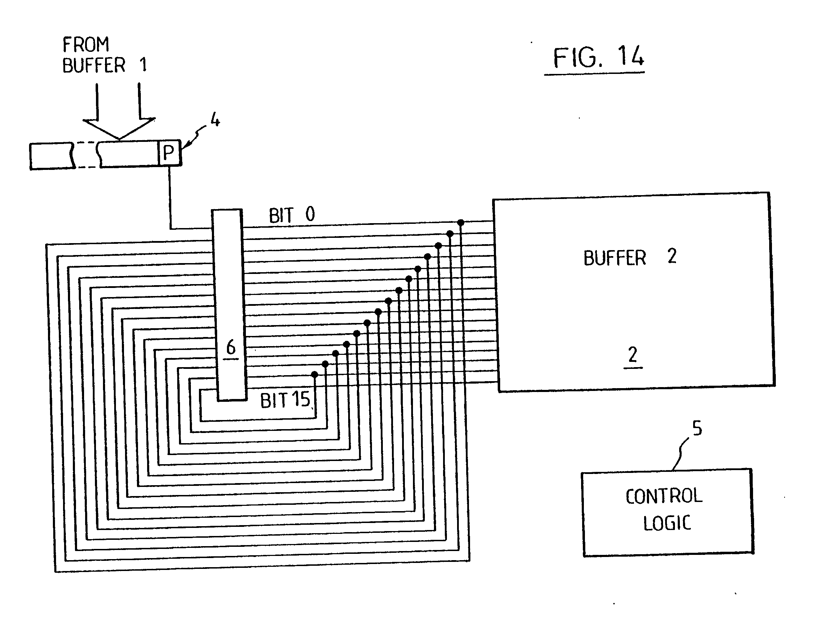

For ease of explanation, the configurations for the double-speed four-times-speed and eight-times-speed modes have been described with reference to different figures. However, these functions may be served by a single apparatus. Figure 13 shows an example of part of the apparatus used for both the four-times-speed and eight-times-speed modes. With the hardware configuration of Figure 13, in the four-times-speed mode, bit 1 of buffer 2 is supplied to bit 2 of latch 6 through AND gate 91 and OR gate 92, while in the eight-times-speed mode, bit Q of the SR4 is supplied to bit 2 of latch 6 through AND gate 93 and OR gate 92. Similarly, the operation of writing one bit into a RAM for one RMW (the so-called normal speed mode) and one of the higher speed modes may be switched in one apparatus. For reference, the hardware configuration implemented for the normal speed mode is shown in Figure 14.

SR4 exists between buffers 1 and 2 and adjusts the number of bits sent to buffer 2 at one time. Accordingly, if buffer 1 is an 8-bit RAM and the number of bits read out at one time is eight, and if buffer 2 is dedicated to the eight-times-speed mode, then SR4 is unnecessary. If buffer 1 is a 16-bit RAM, SR4 repeats the following operations when buffer 2 is operated in the double-speed, four-times-speed, and eight-times-speed modes.

Double-speed mode: One load and seven shifts of 2 bits.

Four-times-speed mode: One load and three shifts of 4 bits.

Eight-times-speed mode: One load and one shift of 8 bits.

A separate shift register may be used for each mode, or the same one may be used by switching its operation. A register performing a different operation according to the specified mode is called a barrel shifter. Its actual implementation is described later in this specification. A circuit that changes the writing of bits into the line buffer in response to the change of the output of the barrel shifter according to the specified mode is called a bit sorter circuit. This can be achieved by generalizing the circuit of Figure 13. Details are given later in this specification.

Although one latch, latch 6, was used for the RMW in the apparatus of Figures 6, 9, and 11, its function may be divided into two registers. Figure 15 shows such a variation for the eight-times-speed mode. In this example, the contents read out from a certain address of RAM 2 are read directly into read-in register 101. In transfer from read-in register 101 to write-in register 102, half of the contents of register 101 are discarded and the remaining bits are also shifted in position. Bits P - W of SR4 are inserted into the remaining positions of register 102. The contents of write-in register 102 formed in this way are then written into the original address of RAM 2.

## 3. Buffer 2

This is a line buffer using a RAM. An advantage of using a memory as a line buffer is that a line buffer of any width is easily obtained.

A disadvantage is that simple use of the RAM can cause a system bottleneck, because the memory access time is much longer than the delay time of a gate. However, in the image processing system according to the invention, this bottleneck is avoided by use of the double-speed mode. If RMW is executed on a state-of-the-art SRAM, one operation takes about 200 nsec.

## 4. Process 2

In this process, a mask processing such as 2 x 2, 3 x 3, or 4 x 4 is carried out. For instance, a 3 x 3 smoothing mask chamfers the corners of a black image. That is, if a 3 x 3 mask is applied to a 3 x 3 image and there is a 2 x 2 black image, the central black is chamfered.

Since, in the normal mode, the image is reproduced in buffer rotated by 90 degrees, the processing for cutting out a 3 x 3 image is relatively easy. In the double-speed mode, however, even if the original image is one line, it is separately written into several bit positions in buffer 2. A special device is then required to output the image from buffer 2. The 3 x 3 mask processing of the eight-times-speed mode and four-times-speed mode are now described.

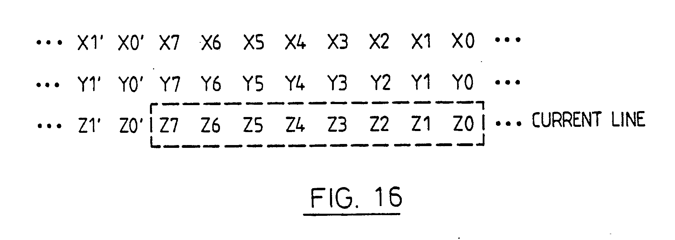

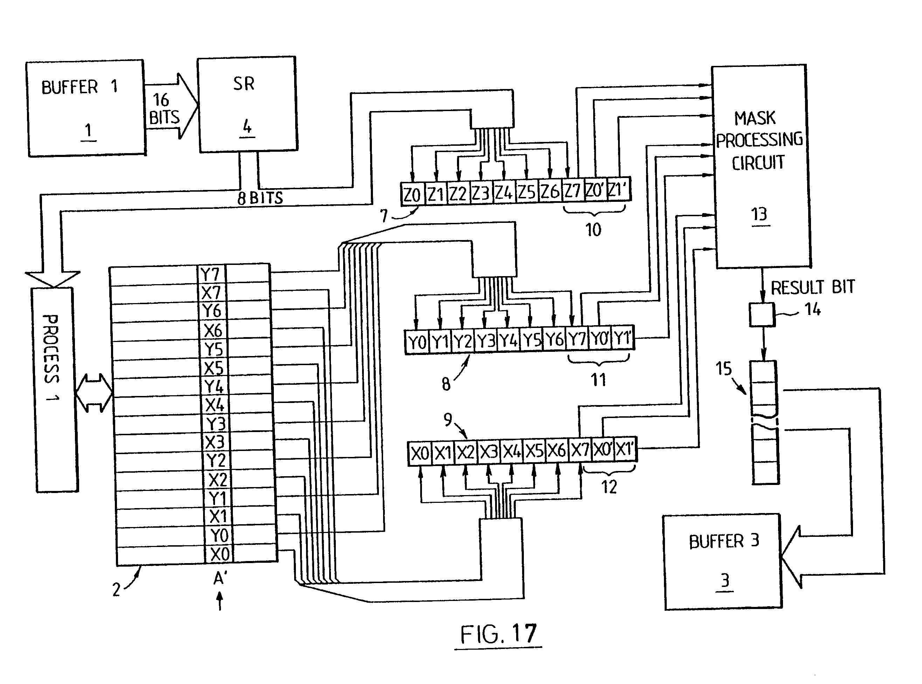

Figure 16 shows the image data bits to be processed. The data processing carried out when eight bits, Z0 - Z7, are received in the line buffer is described with reference to Figure 17.

In Figure 17, shift registers 7, 8, and 9 are 10-bit shift registers, and their leading eight bits can be loaded in parallel. For register 7, eight bits sent from SR4 are loaded in parallel. For register 8, bits 0, 2, 4, 6, 8, 10, 12, and 14 of RAM 2 are loaded in parallel. For register 9, bits 1, 3, 5, 7, 9, 11, 13, and 15 of RAM 2 are loaded in parallel. Shift registers 7, 8, and 9 perform one data loading and seven bit shiftings, respectively, while one PMW operation (two accesses) is executed on RAM 2. The three tail bits of shift registers 7, 8, and 9 also act as the 3-bit shift registers 10, 11, and 12 respectively of mask processing circuit 13. Mask processing circuit 13 refers to the contents of the 3-bit registers 10, 11, and 12 to perform the mask processing, and outputs result bit 14. The result bit is fed to an 8-bit shift register, shift register 15. When eight bits have been accumulated in shift register 15, they are loaded into buffer 3 in parallel. Result data comprising 8 bits are generated and loaded into buffer 3 for each RMW (two accesses) executed on RAM 2.

A more specific description of this process will now be given. When bits Z0 - Z7 are passed from SR4 to process 1 to be received in the line buffer (RAM 2), they are loaded into the leading eight bits of register 7 at the same time. The data one line before and two lines before Z0 - Z7, namely, X0 - X7 and Y0 - Y7, are stored simultaneously in the address A' pointed to by the address pointer of RAM 2. When the contents of address A' are read out, the leading eight bits of register 8 are loaded with Y0 - Y7, while the leading eight bits of register 9 are loaded with X0 - X7. Thus, the image of Figure 16 is reproduced in the three registers 7, 8, and 9. After that, the 3 x 3 mask operations are performed sequentially according to the contents of registers 10, 11, and 12, as these are shifted along. In this way, one access of the image

7

information (SR4), one access of the line buffer (RAM 2), and one access of result buffer 3 occur concurrently, and consequently the processing speed of this image processing system using a RAM as a line buffer is greatly increased.

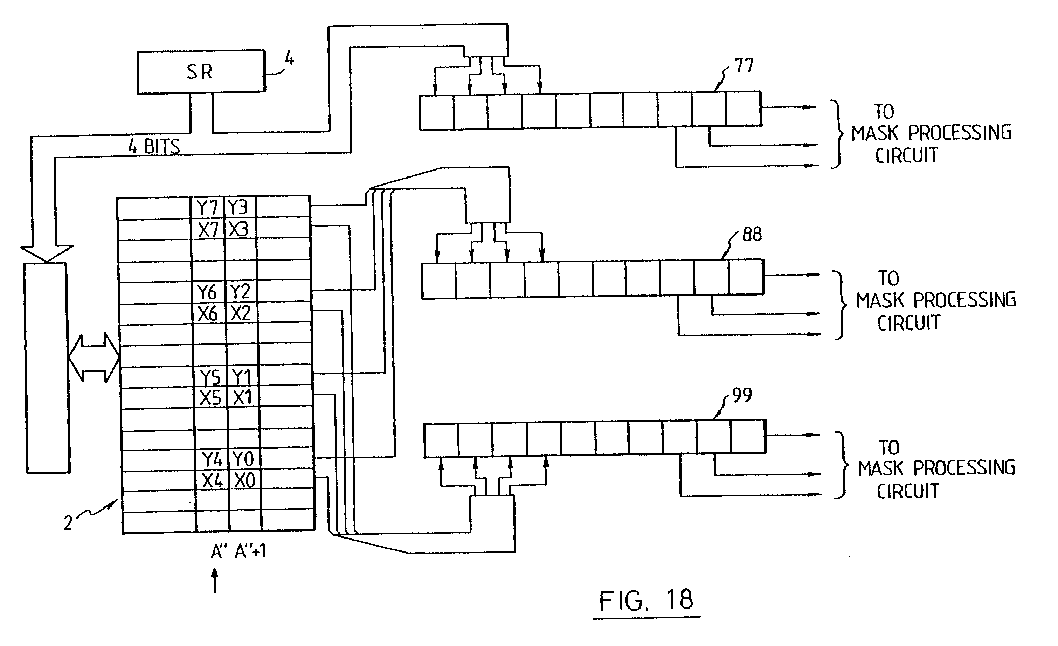

Figure 18 shows a circuit for the four-times-speed mode obtained by modification of the circuit in Figure 17. Shift registers 77, 88, and 99 are similar to registers 7, 8, and 9, except that the only leading four bits are loaded in parallel. Four bits from the SR4 are inputted to the leading four bits of register 77. Bits 0, 4, 8, and 12 of RAM 2 are inputted to the leading four bits of register 88. Bits 1, 5, 9, and 13 of RAM 2 are inputted to the leading four bits of register 99.

For the four-times-speed mode, bits Z7 - Z4 of Figure 16 are written into RAM 2 by one RMW, and bits Z3 - Z0 are written into RAM 2 by the next RMW. Supposing that the address in which bits Z7 - Z4 are written is $A''$, then bits X7 - X4 and Y7 - Y4 are also loaded there, as shown in Figure 18. In addition, bits X3 - X0 and Y3 - Y0 are loaded in address $(A'' + 1)$. Therefore, reading-out the contents of addresses $A''$ and then $(A'' + 1)$ during the two successive RMWs leads to bit strings Z0 -Z1', Y0 - Y1', and X0 - X1' in registers 77, 88, and 99 respectively. Subsequent processing is the same as for the example in Figure 17.

Incidentally, it is also possible to allow the same register to act as registers 7 and 77. In this case, it is necessary to provide a gate circuit for switching between the eight-times-speed mode and the four-times-speed mode as shown in Figure 13. Such a gate circuit could be readily constructed by one skilled in the art.

Similarly, a single image processing system may be adapted for both the normal-speed mode and the eight-times-speed mode. An image processing system that can switch between the normal speed mode and the eight-times-speed mode is useful, since it can perform both image rotation and mask processing at high speed. A general-purpose circuit that changes the way of reading the data from the line buffer and the way of reading the data from the barrel shifter depending on the selected mode is referred to as a bit aligner circuit. Details of such a circuit are given later in this specification.

## 5. Buffer 3

This is the result buffer. Buffer 3 shares the same memory as buffer 1, and buffers 1 and 3 are dynamically switched and used by switching a pointer. That is, if one wishes to perform further processing on the results of a previous processing, this can be achieved simply by switching the pointers for buffers 1 and 3, rather than by transferring the contents of buffer 3 to buffer 1 and then restarting the image processor.

## 6. Process 3

Process 3 performs minor operations on the data before returning them to the microprocessor for when the contents of buffer 3 are read out. Since buffers 1 and 3 share the same memory in terms of circuitry, the same operations are available to buffer 1. There are four types of data process:
(1) No process
(2) Count the number of "1" bits and convert it to a binary number. This is used for counting the number of black bits or the number of patterns. The resultant data are the 5-bit binary numbers 0 - 15 for 16 bits.
(3) Reverse the sequence of the LSB and the MSB replacing bits 0 - 15 with bits 15 - 0. This process is used for reversing the image.
(4) Count the number of "1" bits after setting a mask. Set a 16-bit mask and count the number of "1" bits where the mask is "1." This process is used when one wishes to count "1" bits only in a certain area. Various aspects of the hardware and software used in the invention will now be discussed in more detail.

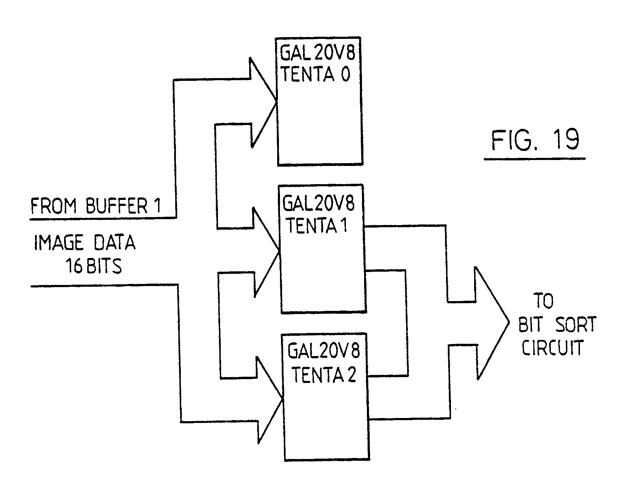

## Barrel shifter (Figure 19)

If the number of bits processed by the line buffer can be changed, a variety of operations can be performed on the same hardware, and as a result the operability will improve. If the number of bits processed by the line buffer equals one, the image can be rotated. The barrel shifter exists between the storage device containing the image and the line buffer, and sends a number of bits corresponding to the operational mode of the system. The output of the barrel shifter changes as shown in Table 1 when the speed mode is changed.

In Table 1, Bxx represents the output of the barrel shifter, and bxx represents the input of the barrel shifter. First, the image data are loaded into the barrel shifter in parallel, and then the shift operation is performed. The inputs of the barrel shifter latches are switched in accordance with this table. The lower half of the table shows the image data entering each latch during the loading operation. The upper half of the table shows the operation of the barrel shifter. For B15, b15, or the input for B15, is connected to the output of B14 in the normal speed mode. It is switched to B13 in the double-speed mode, B11 in the four-times-speed mode and B07 in the eight-times-speed mode, thereby constituting 1-, 2-, 4-, and 8-bit barrel shifters. The barrel shifter consists of three GAL (Generic Array Logic, a type of programmable logic device) modules and feeds the number of bits to the bit sorter circuit, according to the speed mode. The internal logic of the three GAL modules, is given below for TENTA0, TENTA1, and TENTA2 (see also Figure 19).

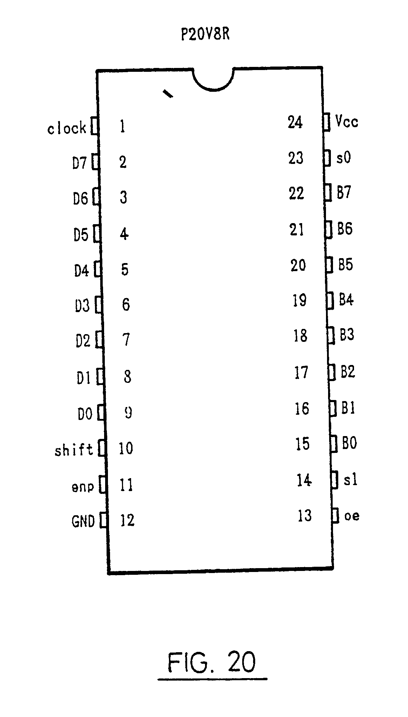

```
          Device tenta0 (Figure 20) - Reduced Equations:


             B7 := (D7 & enp & !shift
                   # B3 & enp & !s0 & s1 & shift
                   # B5 & enp & s0 & !s1 & shift
                   # B6 & enp & !s0 & !s1 & shift
                   # B7 & !enp);


             B6 := (D6 & enp & !shift
                   # B2 & enp & !s0 & s1 & shift
                   # B4 & enp & s0 & !s1 & shift
                   # B5 & enp & !s0 & !s1 & shift
                   # B6 & !enp);


             B5 := (D5 & enp & !shift
```

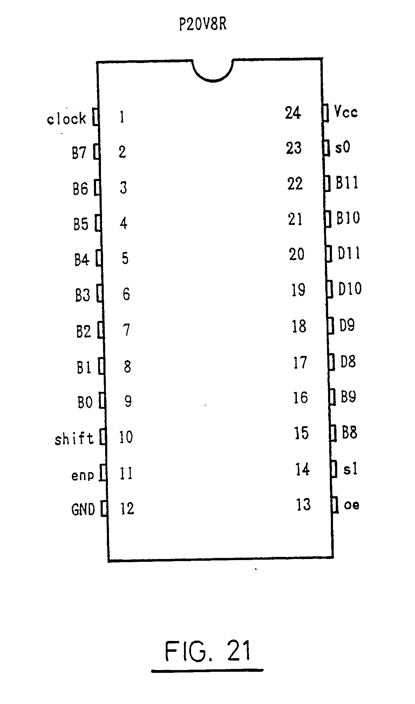

```
             # B1 & enp & !s0 & s1 & shift
             # B3 & enp & s0 & !s1 & shift
             # B4 & enp & !s0 & !s1 & shift
             # B5 & !enp);


  B4 := (D4 & enp & !shift
             # B0 & enp & !s0 & s1 & shift
             # B2 & enp & s0 & !s1 & shift
             # B3 & enp & !s0 & !s1 & shift
             # B4 & !enp);


  B3 := (D3 & enp & !shift
             # B1 & enp & s0 & !s1 & shift
             # B2 & enp & !s0 & !s1 & shift
             # B3 & !enp);


  B2 := (D2 & enp & !shift
             # B0 & enp & s0 & !s1 & shift
             # B1 & enp & !s0 & !s1 & shift
             # B2 & !enp);


  B1 := (D1 & enp & !shift # B0 & enp & !s
             0 & !s1 & shift # B1 & !enp);


  B0 := (D1 & enp & !shift # B0 & !enp);


     Device tenta1 (Figure 21) - Reduced Equations:


      B11 := (D11 & enp & !shift
                # B3 & enp & s0 & s1 & shift
                # B7 & enp & !s0 & s1 & shift
                # B9 & enp & s0 & !s1 & shift
                # B10 & enp & !s0 & !s1 & shift
                # B11 & !enp);
```

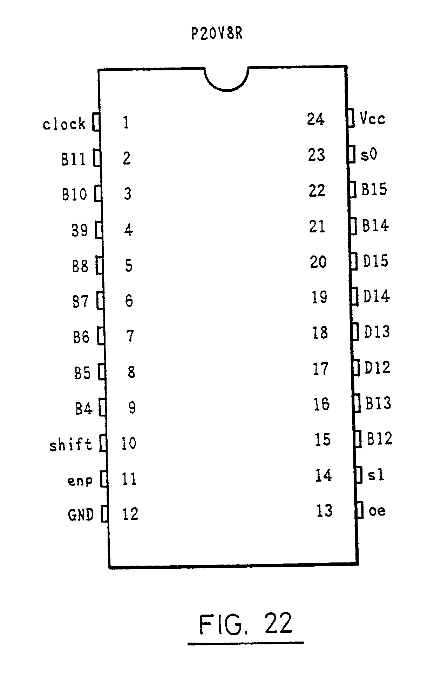

```
B10 := (D10 & enp & !shift
        # B2 & enp & s0 & s1 & shift
        # B6 & enp & !s0 & s1 & shift
        # B8 & enp & s0 & !s1 & shift
        # B9 & enp & !s0 & !s1 & shift
        # B10 & !enp);


B9 := (D9 & enp & !shift
        # B1 & enp & s0 & s1 & shift
        # B5 & enp & !s0 & s1 & shift
        # B7 & enp & s0 & !s1 & shift
        # B8 & enp & !s0 & !s1 & shift
        # B9 & !enp);


B8 := (D8 & enp & !shift
        # B0 & enp & s0 & s1 & shift
        # B4 & enp & !s0 & s1 & shift
        # B6 & enp & s0 & !s1 & shift
        # B7 & enp & !s0 & !s1 & shift#
        # B8 & !enp);


Device tenta2 (Figure 22) - Reduced Equations:


B15 := (D15 & enp & !shift
        # B7 & enp & s0 & s1 & shift
        # B11 & enp & !s0 & s1 & shift
        # B13 & enp & s0 & !s1 & shift
        # B14 & enp & !s0 & !s1 & shift
        # B15 & !enp);


B14 := (D14 & enp & !shift
        # B6 & enp & s0 & s1 & shift
        # B10 & enp & !s0 & s1 & shift
        # B12 & enp & s0 & !s1 & shift
        # B13 & enp & !s0 & !s1 & shift
```

```
                                # B14 & !enp);


           B13 := (D13 & enp & !shift
                        # B5 & enp & s0 & s1 & shift
                        # B9 & enp & !s0 & s1 & shift
                        # B11 & enp & s0 & !s1 & shift
                        # B12 & enp & !s0 & !s1 & shift
                        # B13 & !enp);


           B12 := (D12 & enp & !shift
                        # B4 & enp & s0 & s1 & shift
                        # B8 & enp & !s0 & s1 & shift
                        # B10 & enp & s0 & !s1 & shift
                        # B11 & enp & !s0 & !s1 & shift
                        # B12 & !enp);
```


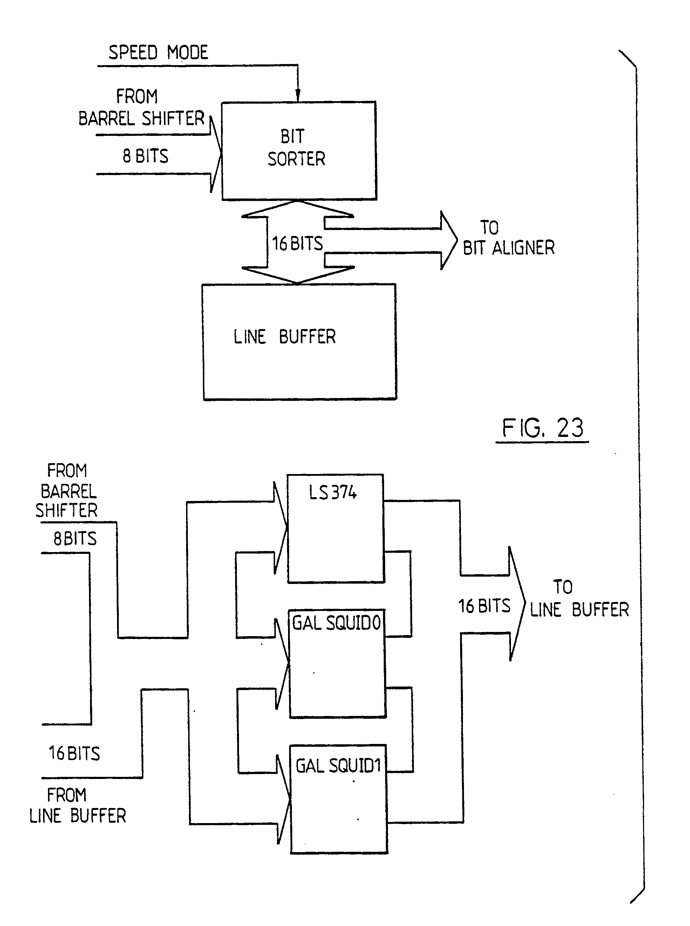

## Bit sorter circuit (Figure 23)

The data sent from the barrel shifter are mixed with the data of the line buffer and written back to the line buffer. Depending on the speed mode, the combination of the new data with the data read from the line buffer varies. The sorting of the outputs of the line buffer and the barrel shifter is shown in Table 2.

B8 - 15 represent the outputs of the barrel shifter. L0 - 15 represent the outputs of the line buffer. The input of the sorter is denoted by sxx, the output by Sxx, and the output of the line buffer by Lxx. The outputs of the sorter are written back to the line buffer. For s15, since the input is always connected to L14, it is indicated by A:Always. For s14, it is connected to B15 in the eight-times-speed mode, but connected to L13 in the other one-, two-, and four-times-speed modes. Thus, "8" is indicated for B15. O:Other means that s14 is connected to L13 in other cases. This circuit is implemented by means of two GAL20V8 and one 74LS374 (8-bit latch). The logical contents of the two GAL modules, SQUID0 and SQUID1, are given below (see also Figure 23).

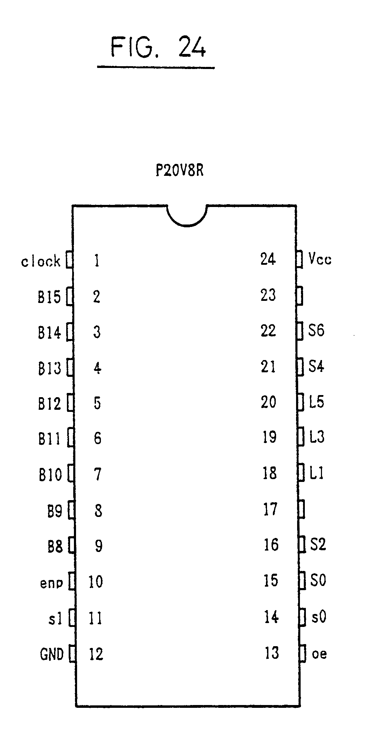

Device squid0 (Figure 24) - Reduced Equations:

```
S6 := (B11 & enp & s0 & s1
       # L5 & enp & !s0
       # L5 & enp & !s1
       # S6 & !enp);


S4 := (B10 & enp & s0 & s1
       # B13 & enp & !s0 & s1
       # L3 & enp & !s1
       # S4 & !enp);


S2 := (B9 & enp & s0 & s1 # L1 & enp &
       !s0 # L1 & enp & !s1 # S2 & !enp);


S0 := (B8 & enp & s0 & s1
       # B12 & enp & !s0 & s1
       # B14 & enp & !s0 & !s1
       # B15 & enp & !s0 & !s1
       # S0 & !enp);
```

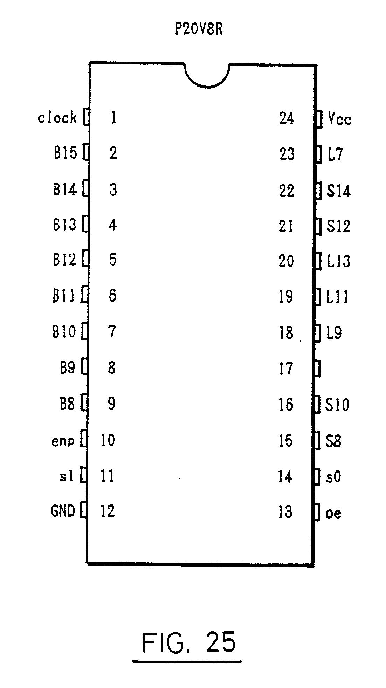

Device squid1 (Figure 25) - Reduced Equations:

```
S14 := (B15 & enp & s0 & s1
        # L13 & enp & !s0
        # L13 & enp & !s1
        # S14 & !enp);


S12 := (B14 & enp & s0 & s1
        # B15 & enp & !s0 & s1
        # L11 & enp & !s1
        # S12 & !enp);
```

```
S10 := (B13 & enp & s0 & s1

        # L9 & enp & !s0

        # L9 & enp & !s1

        # S10 & !enp);


S8 := (B12 & enp & s0 & s1

       # B14 & enp & !s0 & s1

       # B15 & enp & !s0 & !s1

       # L7 & enp & !s0 & !s1

       # S8 & !enp);
```

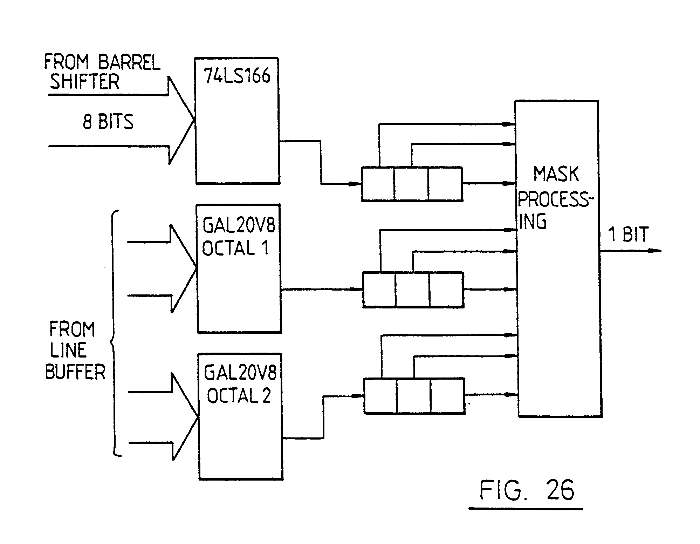

Bit aligner (See Figure 26 and Table 3)

If switching between the one-, two-, four-, and eight-times-speed modes of the line buffer is enabled, a circuit is required for collecting and aligning the data interleaved in the line buffer. The bit aligner makes a bit stream of three bits, using the eight output bits of the barrel shifter and the 16 output bits of the image buffer.

Axx represents the output of the bit aligner, and axx represents the input. For the first line, the output of the barrel shifter is directly used. Regardless of the speed mode, it effectively becomes an 8-bit parallel-in serial-out shift register. The output of this section of the the bit aligner is A07. A represents A:Always in the table.

From the second line onward, the operation changes according to the switching of the speed mode (see Table 4). In the eight-times-speed mode, it becomes an 8-bit parallel-in serial-out shift register. For the four-times-speed mode, since the number of bits that can be fetched at one time from the line buffer is four, this bit aligner effectively becomes a 4-bit shift register. For the double-speed mode, since the number of bits that can be fetched at one time from the line buffer is two, this bit aligner effectively becomes a 2-bit shift register. For the normal speed mode, since the number of bits that can be fetched at one time from the line buffer is one, this bit aligner effectively becomes a single latch. The output of this section of the bit aligner is A17.

This bit aligner circuit comprises two GAL modules and one TTL74LS166 (8-bit parallel-in serial-out shift register).

The internal logic of the two GAL modules, OCTAL1 and OCTAL2, is given below (see also Figure 26).

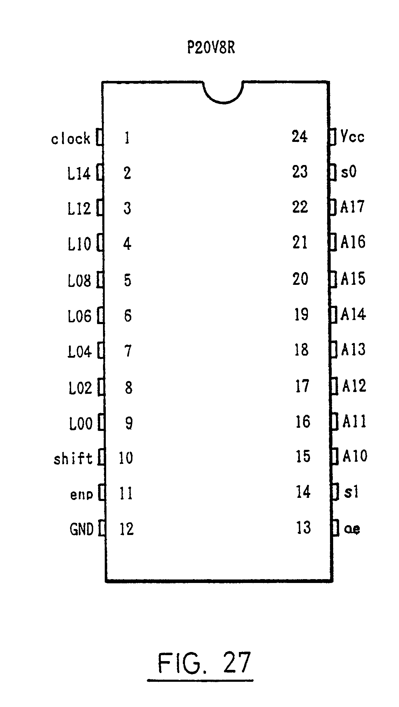

Device octal1 (Figure 27) - Reduced Equations:

```
A17 := (A16 & enp & shift
        # L14 & enp & s0 & s1 & !shift
        # L12 & enp & !s0 & s1 & !shift
        # L08 & enp & s0 & !s1 & !shift
        # L00 & enp & !s0 & !s1 & !shift
        # A17 & !enp);


A16 := (A15 & enp & shift
        # L12 & enp & s0 & s1 & !shift
        # L08 & enp & !s0 & s1 & !shift
        # L00 & enp & !s1 & !shift
        # A16 & !enp);
```

The operation for the third line (see Table 5) is substantially the same as for the second line, but the data fetched from the line buffer are different. The data to be fetched depend on the speed mode. For the eight-times-speed mode, since eight bits of data can be fetched at a time from the line buffer, the bit alinger becomes an 8-bit parallel-in serial-out shift register. For the four-times-speed mode, since the number of bits that can be fetched at one time from the line buffer is four, this bit aligner effectively becomes a 4-bit shift register. For the double-speed mode, since the number of bits that can be fetched at one time from the line buffer is two, this bit aligner effectively becomes a 2-bit shift register. For the normal speed mode, since the number of bits that can be fetched at a time from the line buffer is one, this bit aligner effectively becomes a single latch. The output of this section of the bit aligner is A27.

```
A15 := (A14 & enp & shift
        # L10 & enp & s0 & !shift
        # L04 & enp & !s0 & !shift
        # A15 & !enp);


A14 := (A14 & shift
        # L08 & enp & s0 & s1 & !shift
        # L00 & enp & !s0 & s1 & !shift
        # A14 & !enp);


A13 := (A12 & enp & shift # L06 & enp &
        !shift # A13 & !enp);


A12 := (A11 & enp & shift # L04 & enp &
        !shift # A12 & !enp);


A11 := (A10 & enp & shift # L02 & enp &
        !shift # A11 & !enp);


A10 := (L00 & enp & !shift # A10 &
        !enp);


Device octal2 (Figure 28) - Reduced Equations:


A27 := (A26 & enp & shift
        # L15 & enp & s0 & s1 & !shift
        # L13 & enp & !s0 & s1 & !shift
        # L09 & enp & s0 & !s1 & !shift
        # L01 & enp & !s0 & !s1 & !shift
        # A27 & !enp);
```

```
A26 := (A25 & enp & shift
        # L13 & enp & s0 & s1 & !shift
        # L09 & enp & !s0 & s1 & !shift
        # L01 & enp & !s1 & !shift
        # A26 & !enp);


A25 := (A24 & enp & shift
        # L11 & enp & s0 & !shift
        # L05 & enp & !s0 & !shift
        # A25 & !enp);


A24 := (A24 & shift
        # L09 & enp & s0 & s1 & !shift
        # L01 & enp & !s0 & s1 & !shift
        # A24 & !enp


A23 := (A22 & enp & shift # L07 & enp &
        !shift # A23 & !enp);


A22 := (A21 & enp & shift # L05 & enp &
        !shift # A22 & !emp);


A21 := (A20 & enp & shift # L03 & enp &
        !shift # A21 & !enp);


A20 := (L01 & enp & !shift # A20 &
        !enp);
```

TABLE 1

| | b15 | b14 | b13 | b12 | b11 | b10 | b09 | b08 | b07 | b06 | b05 | b04 | b03 | b02 | b01 | b00 |
|---|---|---|---|---|---|---|---|---|---|---|---|---|---|---|---|---|
| | | | | | | | | | | | | | | | | Input Data |
| B00 | | | | | | | | 8 | | | | 4 | | 2 | 1 | |
| B01 | | | | | | | 8 | | | | 4 | | 2 | 1 | | |
| B02 | | | | | | 8 | | | | 4 | | 2 | 1 | | | |
| B03 | | | | | 8 | | | | 4 | | 2 | 1 | | | | |
| B04 | | | | 8 | | | | 4 | | 2 | 1 | | | | | |
| B05 | | | 8 | | | | 4 | | 2 | 1 | | | | | | |
| B06 | | 8 | | | | 4 | | 2 | 1 | | | | | | | |
| B07 | 8 | | | | 4 | | 2 | 1 | | | | | | | | |
| B08 | | | | 4 | | 2 | 1 | | | | | | | | | |
| B09 | | | 4 | | 2 | 1 | | | | | | | | | | |
| B10 | | 4 | | 2 | 1 | | | | | | | | | | | |
| B11 | 4 | | 2 | 1 | | | | | | | | | | | | |
| B12 | | 2 | 1 | | | | | | | | | | | | | |
| B13 | 2 | 1 | | | | | | | | | | | | | | |
| B14 | 1 | | | | | | | | | | | | | | | |
| B15 | | | | | | | | | | | | | | | | |
| M00 | | | | | | | | | | | | | | | | L |
| M01 | | | | | | | | | | | | | | | L | |
| M02 | | | | | | | | | | | | | | L | | |
| M03 | | | | | | | | | | | | | L | | | |
| M04 | | | | | | | | | | | | L | | | | |
| M05 | | | | | | | | | | | L | | | | | |
| M06 | | | | | | | | | | L | | | | | | |
| M07 | | | | | | | | | L | | | | | | | |
| M08 | | | | | | | | L | | | | | | | | |
| M09 | | | | | | | L | | | | | | | | | |
| M10 | | | | | | L | | | | | | | | | | |
| M11 | | | | | L | | | | | | | | | | | |
| M12 | | | | L | | | | | | | | | | | | |
| M13 | | | L | | | | | | | | | | | | | |
| M14 | | L | | | | | | | | | | | | | | |
| M15 | L | | | | | | | | | | | | | | | |

18

## TABLE 2

| | | | | | | | | | | Input Data | | | | | | |
|---|---|---|---|---|---|---|---|---|---|---|---|---|---|---|---|---|
| | s15 | s14 | s13 | s12 | s11 | s10 | s09 | s08 | s07 | s06 | s05 | s04 | s03 | s02 | s01 | s00 |
| B08 | · | · | · | · | · | · | · | · | · | · | · | · | · | · | · | 8 |
| B09 | · | · | · | · | · | · | · | · | · | · | · | · | · | 8 | · | · |
| B10 | · | · | · | · | · | · | · | · | · | · | · | 8 | · | · | · | · |
| B11 | · | · | · | · | · | · | · | · | · | 8 | · | · | · | · | · | 4 |
| B12 | · | · | · | · | · | · | · | 8 | · | · | · | 4 | · | · | · | · |
| B13 | · | · | · | · | · | 8 | · | 4 | · | · | · | · | · | · | · | 2 |
| B14 | · | · | · | 8 | · | · | · | · | · | · | · | · | · | · | · | 1 |
| B15 | · | 8 | · | 4 | · | · | · | 2 | · | · | · | · | · | · | · | · |
| L00 | | | | | | | | | | | | | | | A | · |
| L01 | | | | | | | | | | | | | | O | · | · |
| L02 | | | | | | | | | | | | | A | · | · | · |
| L03 | | | | | | | | | | | | O | · | · | · | · |
| L04 | | | | | | | | | | | A | · | · | · | · | · |
| L05 | | | | | | | | | | O | · | · | · | · | · | · |
| L06 | | | | | | | | | A | · | · | · | · | · | · | · |
| L07 | | | | | | | | O | · | · | · | · | · | · | · | · |
| L08 | | | | | | | A | · | · | · | · | · | · | · | · | · |
| L09 | | | | | | O | · | · | · | · | · | · | · | · | · | · |
| L10 | | | | | A | · | · | · | · | · | · | · | · | · | · | · |
| L11 | | | | O | · | · | · | · | · | · | · | · | · | · | · | · |
| L12 | | | A | · | · | · | · | · | · | · | · | · | · | · | · | · |
| L13 | | O | · | · | · | · | · | · | · | · | · | · | · | · | · | · |
| L14 | A | · | · | · | · | · | · | · | · | · | · | · | · | · | · | · |
| L15 | | | | | | | | | | | | | | | | |

## TABLE 3

| Operation of the bit aligner for the first image line | | | | | | | | |
|---|---|---|---|---|---|---|---|---|
| | a07 | a06 | a05 | a04 | a03 | a02 | a01 | a00 |
| B08 | · | · | · | · | · | · | · | A |
| B09 | · | · | · | · | · | · | A | |
| B10 | · | · | · | · | · | A | | |
| B11 | · | · | · | · | A | | | |
| B12 | · | · | · | A | | | | |
| B13 | · | · | A | | | | | |
| B14 | · | A | | | | | | |
| B15 | A | | | | | | | |

TABLE 4

| Operation of the bit aligner for the second image line | | | | | | | |
|---|---|---|---|---|---|---|---|
| | a17 | a16 | a15 | a14 | a13 | a12 | a11 | a10 |
| L00 | 1 | 2 | - | 4 | - | - | - | 8 |
| L01 | - | - | - | - | - | - | - | |
| L02 | - | - | - | - | - | - | 8 | |
| L03 | - | - | - | - | - | - | | |
| L04 | - | - | 4 | - | - | 8 | | |
| L05 | - | - | - | - | - | | | |
| L06 | - | - | - | - | 8 | | | |
| L07 | - | - | - | - | | | | |
| L08 | 2 | 4 | - | 8 | | | | |
| L09 | - | - | - | | | | | |
| L10 | - | - | 8 | | | | | |
| L11 | - | - | | | | | | |
| L12 | 4 | 8 | | | | | | |
| L13 | - | | | | | | | |
| L14 | 8 | | | | | | | |
| L15 | . | | | | | | | |

TABLE 5

| Operation of the bit aligner for the third image line | | | | | | | |
|---|---|---|---|---|---|---|---|
| | a27 | a26 | a25 | a24 | a23 | a22 | a21 | a20 |
| L00 | - | - | - | - | - | - | - | - |
| L01 | 1 | 2 | - | 4 | - | - | - | 8 |
| L02 | - | - | - | - | - | - | - | |
| L03 | - | - | - | - | - | - | 8 | |
| L04 | - | - | - | - | - | - | | |
| L05 | - | - | 4 | - | - | 8 | | |
| L06 | - | - | - | - | - | | | |
| L07 | - | - | - | - | 8 | | | |
| L08 | - | - | - | - | | | | |
| L09 | 2 | 4 | - | 8 | | | | |
| L10 | - | - | - | | | | | |
| L11 | - | - | 8 | | | | | |
| L12 | - | - | | | | | | |
| L13 | 4 | 8 | | | | | | |
| L14 | - | | | | | | | |
| L15 | 8 | | | | | | | |

## Claims

1. Apparatus for processing image data, wherein an image comprises lines of X data bits, said apparatus including:

(a) a RAM (2);

(b) n buffers formed by logically dividing the bit width of the RAM into n portions (n is an integer not smaller than 2 and is a divisor of X);

(c) means (4) for fetching n bits of image data, the n bits being continuous in the line direction of the image;

(d) means for sequentially selecting X/n RAM addresses;

(e) means (6) for discarding one data bit in each buffer at the selected RAM address and for shifting the remaining data bits therein one bit in the bit width direction of the RAM; and

(f) means (6) for placing the n bits obtained by the fetching means (c) into vacant bit positions at the selected RAM address, placing one bit into each of said n buffers.

2. Apparatus for processing image data as claimed in claim 1, wherein n is a divisor of the number of bits across the bit width of the RAM, and said n buffers are all equal in size.

3. Apparatus for processing image data as claimed in any preceding claim, wherein at least two different values of n, the number of buffers in said RAM, can be specified, and said means (c) to (f) are provided for each of said at least two different values of n.

4. Apparatus for processing image data as claimed in claim 3, wherein said apparatus further includes means for switching between said at least two different values of n.

5. Apparatus for processing image data as claimed in any preceding claim, wherein said apparatus further includes:

means for fetching single bits of image data;

means for sequentially selecting X RAM addresses;

means for discarding one data bit at the selected RAM address and for shifting the remaining data bits therein one bit in the bit width direction of the RAM; and

means for placing a single bit obtained by said fetching means into a vacant bit position at the selected RAM address.

6. Apparatus for processing image data as claimed in any preceding claim, wherein said apparatus further includes:

means for reading out data from said RAM and distributing it according to image line number; and

means for performing a 3x3 or 4x4 masking operation on the data read out from said RAM.

7. A method for processing image data, wherein an image comprises lines of X data bits, in apparatus including a RAM, said method comprising the following steps:

a) logically dividing the bit width of the RAM into n buffers, where n is an integer not smaller than 2 and is a divisor of X;

b) fetching n bits of image data, the n bits being continuous in the line direction of the image;

c) sequentially selecting X/n RAM addresses;

d) discarding one data bit in each buffer at the selected RAM address and shifting the positions of the remaining data bits therein by one bit in the bit width direction of the RAM; and

e) placing the n bits obtained in step b into vacant bit positions at the selected RAM address, placing one bit in each of said n buffers.

8. A method for processing image data as claimed in claim 6, wherein at least two different values of n, the number of buffers in said RAM can be specified, and steps (b) to (e) are provided for each of said values, and wherein said method further includes the initial step of specifying the value of n.

21

FIG. 1 PRIOR ART

FROM BIT STREAM

SR

RAM

A0

A

15

15

A0

B

FROM BIT STREAM

14

15

A1

C

14

15 14

A1

D

FIG. 2

PRIOR ART

BIT 0 | 015 014 013 012 011 010 009 008 007 006 005 004 003 002 001 000 115 114 113 112 111 110 109

BIT 15

A0 1 2 3 4 5 6 7 8 9 10 11 12 13 14 15 16 17 18 19 20 21 22 23 24

ADDRESS POINTER

FIG. 3   PRIOR ART

EP 0 405 805 A2

ADDRESS POINTER

FIG. 4   PRIOR ART

BUFFER 1

1

4

BUFFER 2

2

| 7 | 8 | 9 |
| 6 | 3 | 4 |
| 5 | 2 | 1 |

15

BUFFER 3

3

BIT SLICE
ADDER

MPU

PROCESS 1

PROCESS 2

PROCESS 3

BUFFER 1

BUFFER 2

BUFFER 3

FIG. 5

FROM
BUFFER 1

SR
4

FIG. 6

Q P

BIT 0

6

BIT 15

BUFFER 2

2

CONTROL
LOGIC

5

EP 0 405 805 A2

FIG. 7

FIG. 8

FROM
BUFFER 1

4

S R Q P

FIG. 9

BIT 0

6

BUFFER 2

2

BIT 15

CONTROL
LOGIC

5

EP 0 405 805 A2

30

FIG. 10

FIG. 11

FROM BUFFER 1

4

| W | V | U | T | S | R | Q | P |

BIT 0

6

BIT 15

BUFFER 2

2

CONTROL LOGIC

5

FIG.12

BIT 0

LINE 1
2

8n+7 { 15 7

1
2

8n+6 { 14 6

1
2

8n+5 { 13 5

1
2

8n+4 { 12 4

1
2

8n+3 { 11 3

1
2

8n+2 { 10 2

1
2

8n+1 { 9 1

1
2

8n { 8 0

1
2

BIT 15

ADDRESS 0 1 2 3 4 5

R Q P — 4

EIGHT-TIMES-SPEED MODE INDICATION

FOUR-TIMES-SPEED MODE INDICATION

93

91

92

6

0
1
2
3

BIT 1

2

FIG. 13

FIG. 14

FIG. 15

··· X1' X0' X7 X6 X5 X4 X3 X2 X1 X0 ···

··· Y1' Y0' Y7 Y6 Y5 Y4 Y3 Y2 Y1 Y0 ···

··· Z1' Z0' | Z7 Z6 Z5 Z4 Z3 Z2 Z1 Z0 | ··· CURRENT LINE

## FIG. 16

FIG.17

BUFFER 1
1

BUFFER 3
3

SR
4

MASK PROCESSING CIRCUIT
13

RESULT BIT
14

15

16 BITS

8 BITS

PROCESS 1

Z0 Z1 Z2 Z3 Z4 Z5 Z6 Z7 Z0'Z1'
10

Y0 Y1 Y2 Y3 Y4 Y5 Y6 Y7 Y0'Y1'
11

X0 X1 X2 X3 X4 X5 X6 X7 X0'X1'
12

7

8

9

Y7 X7 Y6 X6 Y5 X5 Y4 X4 Y3 X3 Y2 X2 Y1 X1 Y0 X0
A'
2

37

EP 0 405 805 A2

SR

4 BITS

Y7 Y3
X7 X3

Y6 Y2
X6 X2

Y5 Y1
X5 X1

Y4 Y0
X4 X0

A" A"+1

2

77

88

99

TO
MASK PROCESSING
CIRCUIT

TO
MASK PROCESSING
CIRCUIT

TO
MASK PROCESSING
CIRCUIT

FIG. 18

FIG. 19

FROM BUFFER 1

IMAGE DATA
16 BITS

GAL 20V8
TENTA 0

GAL 20V8
TENTA 1

GAL 20V8
TENTA 2

TO
BIT SORT
CIRCUIT

P20V8R

| | | | |
|---|---|---|---|
| clock | 1 | 24 | Vcc |
| D7 | 2 | 23 | s0 |
| D6 | 3 | 22 | B7 |
| D5 | 4 | 21 | B6 |
| D4 | 5 | 20 | B5 |
| D3 | 6 | 19 | B4 |
| D2 | 7 | 18 | B3 |
| D1 | 8 | 17 | B2 |
| D0 | 9 | 16 | B1 |
| shift | 10 | 15 | B0 |
| enp | 11 | 14 | s1 |
| GND | 12 | 13 | oe |

FIG. 20

P20V8R

| | | | |
|---|---|---|---|
| clock | 1 | 24 | Vcc |
| B7 | 2 | 23 | s0 |
| B6 | 3 | 22 | B11 |
| B5 | 4 | 21 | B10 |
| B4 | 5 | 20 | D11 |
| B3 | 6 | 19 | D10 |
| B2 | 7 | 18 | D9 |
| B1 | 8 | 17 | D8 |
| B0 | 9 | 16 | B9 |
| shift | 10 | 15 | B8 |
| enp | 11 | 14 | s1 |
| GND | 12 | 13 | oe |

FIG. 21

P20V8R

FIG. 22

SPEED MODE

FROM
BARREL SHIFTER

8 BITS

BIT
SORTER

16 BITS

TO
BIT ALIGNER

LINE BUFFER

FIG. 23

FROM
BARREL
SHIFTER

8 BITS

LS 374

GAL SQUID0

16 BITS

TO
LINE BUFFER

16 BITS

FROM
LINE BUFFER

GAL SQUID1

# FIG. 24

P20V8R

| | | | |
|---|---|---|---|
| clock | 1 | 24 | Vcc |
| B15 | 2 | 23 | |
| B14 | 3 | 22 | S6 |
| B13 | 4 | 21 | S4 |
| B12 | 5 | 20 | L5 |
| B11 | 6 | 19 | L3 |
| B10 | 7 | 18 | L1 |
| B9 | 8 | 17 | |
| B8 | 9 | 16 | S2 |
| enp | 10 | 15 | S0 |
| s1 | 11 | 14 | s0 |
| GND | 12 | 13 | oe |

P20V8R

| | | | | |
|---|---|---|---|---|
| clock | 1 | | 24 | Vcc |
| B15 | 2 | | 23 | L7 |
| B14 | 3 | | 22 | S14 |
| B13 | 4 | | 21 | S12 |
| B12 | 5 | | 20 | L13 |
| B11 | 6 | | 19 | L11 |
| B10 | 7 | | 18 | L9 |
| B9 | 8 | | 17 | |
| B8 | 9 | | 16 | S10 |
| enp | 10 | | 15 | S8 |
| s1 | 11 | | 14 | s0 |
| GND | 12 | | 13 | oe |

## FIG. 25

FROM BARREL
SHIFTER

8 BITS

74LS166

GAL20V8
OCTAL 1

GAL20V8
OCTAL 2

FROM
LINE
BUFFER

MASK
PROCESS-
ING

1 BIT

FIG. 26

P20V8R

| | | | |
|---|---|---|---|
| clock | 1 | 24 | Vcc |
| L14 | 2 | 23 | s0 |
| L12 | 3 | 22 | A17 |
| L10 | 4 | 21 | A16 |
| L08 | 5 | 20 | A15 |
| L06 | 6 | 19 | A14 |
| L04 | 7 | 18 | A13 |
| L02 | 8 | 17 | A12 |
| L00 | 9 | 16 | A11 |
| shift | 10 | 15 | A10 |
| enp | 11 | 14 | s1 |
| GND | 12 | 13 | oe |

FIG. 27

P20V8R

FIG. 28